# EUROPEAN PATENT SPECIFICATION

(11) **EP 1 632 405 B1**
(45) Date of publication and mention of the grant of the patent: **22.08.2007**
(21) Application number: 05019134.5
(22) Date of filing: 02.09.2005
(51) Int. Cl.: B60R 21/16

(54) **Airbag device**
Luftsack
Sac gonflable

(30) Priority: 03.09.2004 US 606930 P; 25.08.2005 US 210789
(43) Date of publication of application: 08.03.2006
(73) Proprietor: TAKATA CORPORATION, Minato-ku, Tokyo 106-8510 (JP)
(72) Inventor: Hasebe, Masahiro, Minato-ku, Tokyo 106-8510 (JP); Sakata, Yoshiaki, Minato-ku, Tokyo 106-8510 (JP)
(74) Representative: Banzer, Hans-Jörg

(56) References cited:
- EP-A- 0 861 762
- EP-A- 1 364 838
- EP-A- 1 439 096
- US-A1- 2001 033 072
- US-B1- 6 419 262

## Description

### BACKGROUND

The present invention relates to an airbag.device in which an airbag is inflated to protect a vehicle occupant in the event of a vehicle collision. More particularly, the present invention relates to an airbag device with an improved airbag configuration for protecting an occupant.

An airbag for protecting a vehicle occupant is normally stored in a folded state in a cavity disposed in the middle section of a steering wheel or within an instrument panel of a vehicle. In the event of a vehicle collision, the airbag is deployed and inflated in the vehicle interior by gas produced by an inflator. The inflated airbag receives and restrains the occupant.

Airbags typically deploy into a position between the occupant and a portion of the vehicle such as, for example, the instrument panel or the windshield. Occupants range in size from for example, a 5^{th} percentile female to a 95^{th} percentile male, and may have different kinetic energies (lower to higher, respectively).

In US 2001/0033072, an airbag is disclosed which corresponds to the preambles of claims 1 and 5.

### SUMMARY

In view of the above, the present invention provides an airbag device according to claims 1 and 5 and an occupant protection device according to claim 7. The other dependent claims define preferred and advantageous embodiments of the invention.

It is to be understood that both the foregoing general description and the following detailed description are exemplary and explanatory only and are not restrictive of the invention claimed.

### BRIEF DESCRIPTION OF THE DRAWINGS

These and other features, aspects, and advantages of the present invention will become apparent from the following description, appended claims, and the accompanying exemplary embodiments shown in the drawings, which are described briefly below.
Figure 1 is a perspective view of an airbag device according to an embodiment of the present invention.
Figure 2 is a schematic view of the airbag device according to Figure 1.
Figure 3 is a schematic view of the airbag device according to Figure 1.
Figure 4 is a perspective view of an airbag device according to an embodiment of the present invention.
Figure 5 is a schematic view of the airbag device according to Figure 4.
Figure 6 is a schematic view of the airbag device according to Figure 4.
Figure 7 is a perspective view of an airbag device according to a comparative example.
Figure 8 is a schematic view of the airbag device according to Figure 7.
Figure 9 is a schematic view of the airbag device according to Figure 7.
Figure 10 is a view of an occupant protection system.

### DETAILED DESCRIPTION

Embodiments according to the present invention will be described with reference to the attached drawings.
Although the following embodiments are directed to an airbag device for a passenger seat mounted in the upper part of a vehicle dashboard, the airbag device according to the present invention may be applied to an airbag other than for a passenger seat. The directions of left and right refer to the left and right in the direction of a vehicle; i.e., left is the driver side, right is the passenger side.

According to an embodiment of the present invention, an airbag device is provided. The airbag device includes an airbag 20 that is normally stored in an upper part of an instrument panel and is attached to an airbag module 15. The airbag 20 can be inflated and deployed into a space in front of a vehicle occupant in the event of an emergency, such as a vehicle collision. The airbag includes a first region 25 and a second region 21. The first region 25 of the airbag 20 is configured to have a higher energy absorption than the second region 21 of the airbag 20.

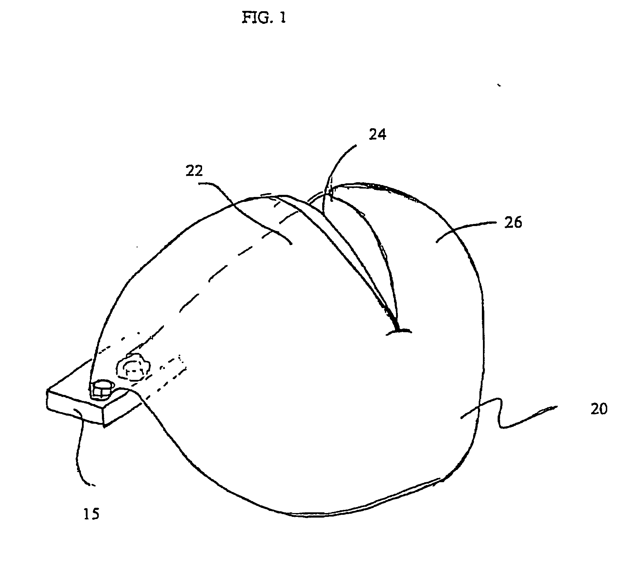

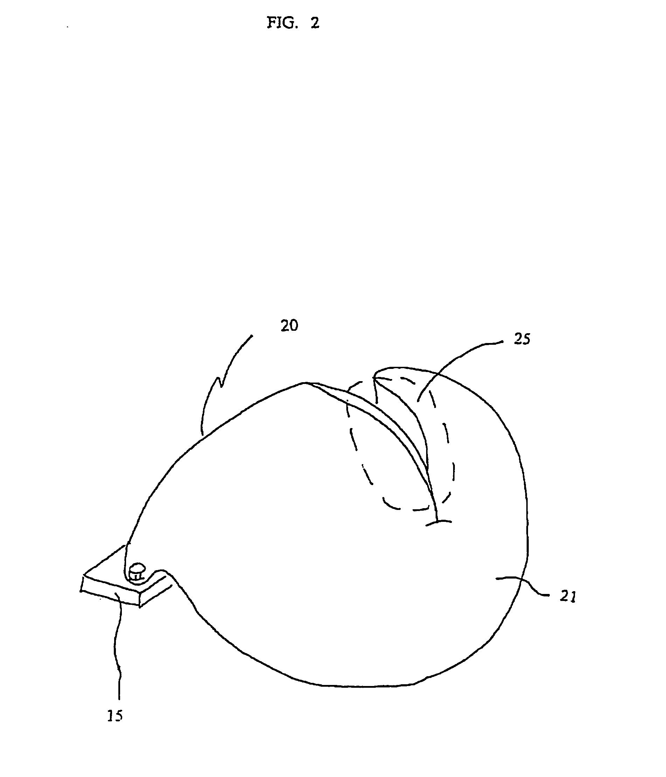

According to an embodiment of the invention, shown in Figures 1, 2 and 3, an airbag device is provided. The airbag device includes an airbag 20 with lower and higher levels of energy absorption areas. The airbag 20, as shown in Figure 1, includes a left 22 and right 26 portion. The left 22 and right 26 portions are separated in the upper half of the airbag 20. The left 22 and right 26 portions are separated near the center of the airbag 20 and the side proximate or facing the occupant. This airbag 20 includes a first region 25 and a second region 21. The first region 25 has a higher energy absorption than the second region 21, which can be seen in Figure 2. The first region 25 is an upper portion of the airbag 20 adjacent to and surrounding the separation 24 of the left 22 and the right 26 portions of this airbag 20. The lower half of the portions 22, 26 of the airbag 20, in other words the left 22 and right 26 portions, in the lower half are connected together so there is no separation between the left 22 and right portions 26. The separated portion 24 in the upper half can be formed by a crease, a valley, a protrusion, or by any other configuration for creating a separation 24.

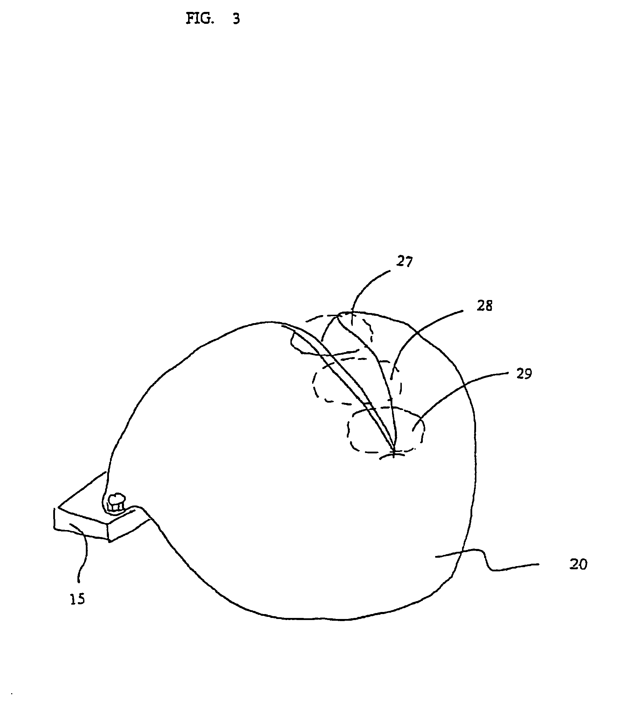

Along the separated area 24 in the upper half between the left 22 and right 26 portions is a varying range of energy absorption levels. There is a first area 27 near the top portion of the airbag 20 between the left 22 and right 26 portions that has an energy absorption level capable of withstanding the force from a 95th percentile male. The second area 28 on the airbag 20 is capable of withstanding forces from a 50^{th} percentile male. This second area 28 is lower than the first area 27 and closer to an occupant along the separation 24 between the left 22 and right 26 portion. There is a third area 29 in this airbag 20, as shown in Figure 3, that is capable of withstanding the forces from a fifth percentile female, for example. This third area 29 is farther away from the top of the airbag 20 and is at the lower end of the separation 24 between the left 22 and the right 26 portion. The 95^{th} percentile male to the fifth percentile female is a broad range and a general range showing an example of the range of energy or force that can be withstood by an airbag 20 because of the different energy absorption levels created by the separated area 24. A 95^{th} percentile male would be a heavier set male, whereas a fifth percentile female would be a lower weight, more petite, female occupant.

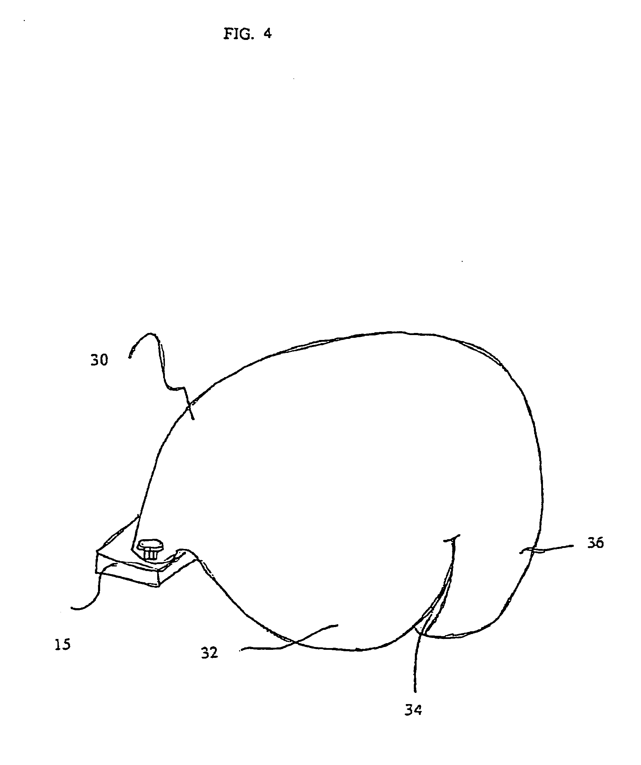

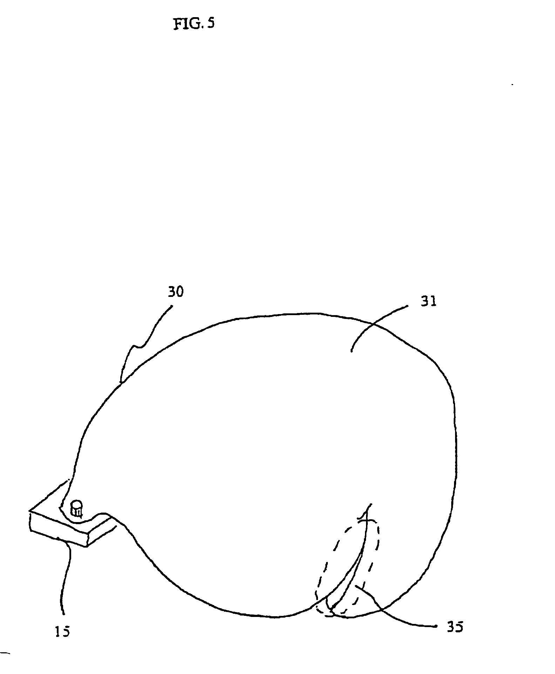

According to another embodiment of the invention, shown in Figures 4-6, the airbag 30 can be separated between a left 32 and right 36 portion along the lower half of the airbag 30. This airbag 30 also has a first region 35 and a second region 31. The first region 35 is configured to have a higher energy absorption than the second region 31. In this embodiment, as shown in Figure 5, the higher energy absorption or, in other words the first region 35 of this embodiment, is shown in the lower half of the airbag 30 proximate where the chest portion or the upper body of an occupant would be. The upper portion of the airbag 30 is connected together so that only the lower half of the airbag 30 is separated between the left 32 and the right portion 36.

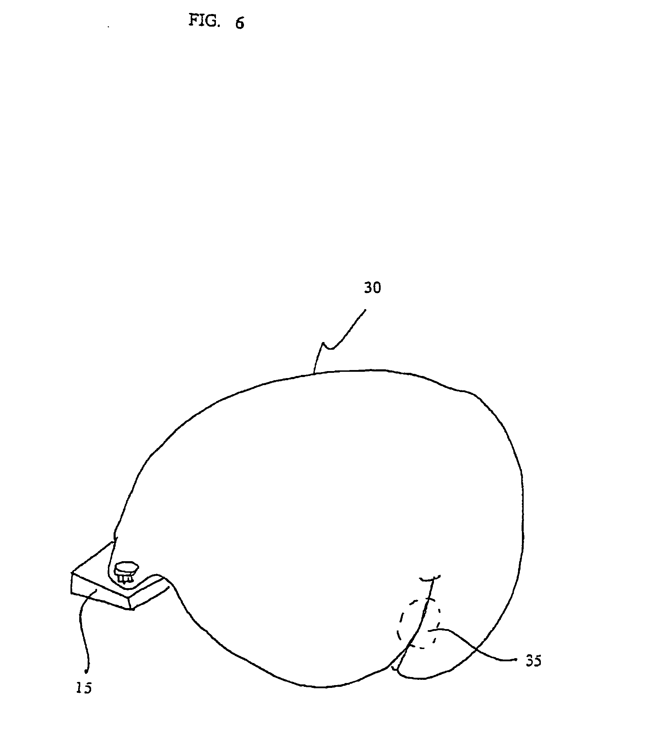

As shown in Figures 6, an occupant could hit the airbag 30 in the lower portion proximate to and along the separation 34. This separation area 34 along the separation between the left portion 32 and the right portion 36 has a higher energy absorption than the remainder of the airbag 30. Further, according to an embodiment, a vehicle can include a seat weight sensor 62 and a pre-crash sensor 72.

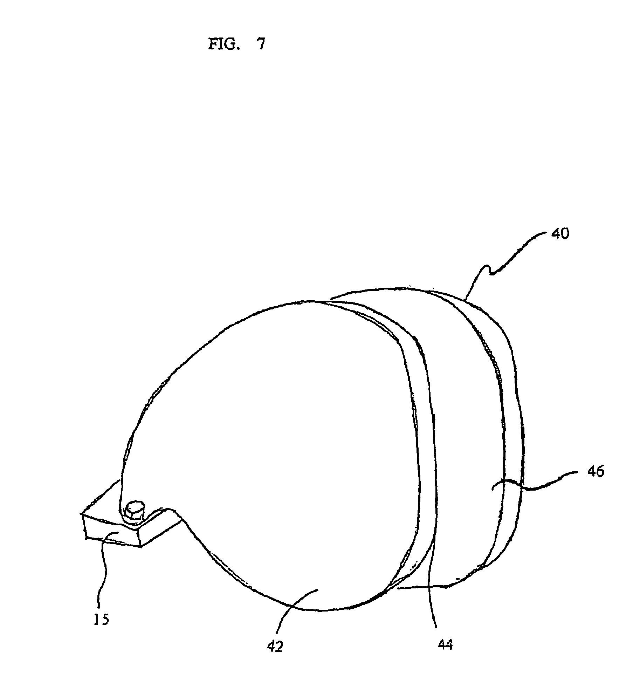

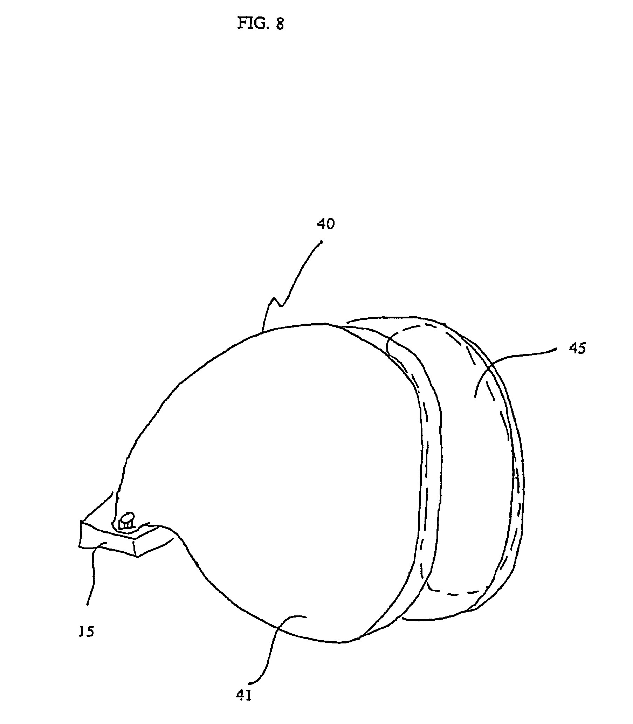

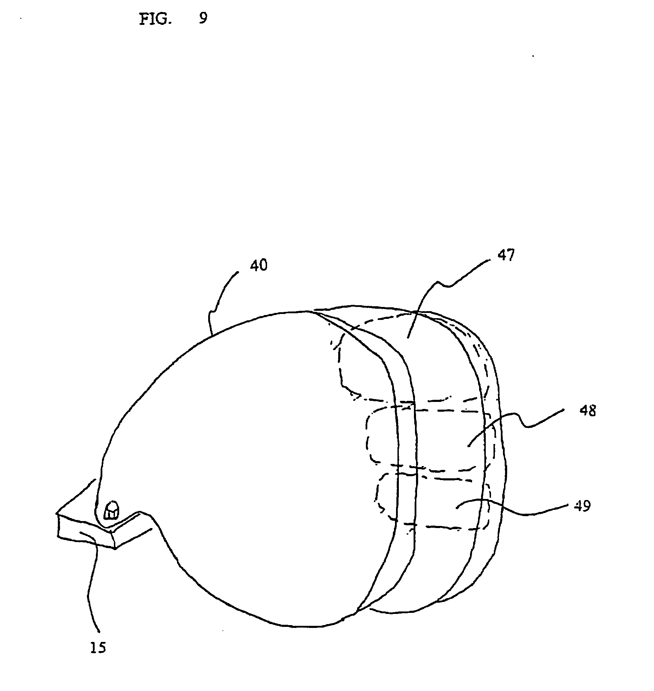

As shown in Figures 7 through 9, an airbag 40 is divided into a first 45 and second 41 region whereas the first 45 region is configured to have a higher energy absorption than the second region 41. In this example, as shown in Figure 7, the left 42 and right 46 portions are separated along the entire length in the vertical direction of the airbag 40 on the side facing an occupant or proximate to an occupant. The separation area 44, as shown in Figure 8, has a higher energy absorption than the remaining areas of the airbag 40 farther away from the separation 44. The airbag 40 as can be seen in Figure 9, can also withstand kinetic energy or kinetic forces from varying occupants. The upper most portion, a first area 47, of the airbag 40 that will be impacted by an occupant during a collision has the highest energy absorption compared to the remainder of the airbag 40. The uppermost portion has an energy absorption capable of withstanding the forces from a 95th percentile male. Slightly lower down from the first area 47 is a second area 48 that is capable of withstanding, for example, the forces from a 50th percentile male. A third area 49 is capable of withstanding the forces from, for example, a fifth percentile female. The third area 49 is lower than the first 47 and second 48 area and closer to where a chest or torso of an occupant would connect with an airbag 40 during a collision.

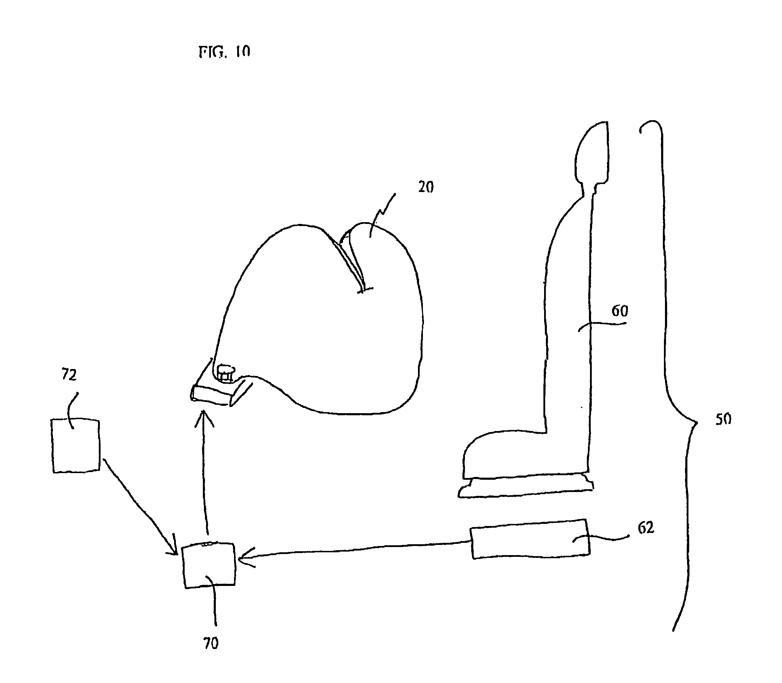

An occupant protection device 50 is shown in Figure 10. The occupant protection device 50 includes an airbag 20, 30, 40 that may be deployed during a collision according to an employment control unit 70. An employment control unit (ECU) 70 receives signals from a seat weight sensor 62 and a pre-crash sensor 72 and determines whether or not to inflate the airbag 20, 30, 40. The ECU 70 also sends a signal to inflate the airbag 20, 30, 40 when necessary. The seat weight sensor 62 weighs an automobile seat 60, as well as the weight of the occupant thereon.
The ECU 70 takes in signals from the seat weight sensor 62 and the pre-crash sensor 72 and signals the airbag 20, 30, 40 to inflate according to the weight of the occupant and whether not the occupant is in an out-of-position location.

According to an embodiment, as shown in Figures 1 through 3, the upper half of the portions 22, 26 are separated.
The lower half of the left 22 and right 26 portions are connected together. The separated portion 24 produces a higher level of energy absorption to protect an occupant's head coming into contact at a collision. The connected portion produces a lower level of energy absorption to protection an occupants chest and torso.

The levels of energy absorption required for different parts of an occupant's body (for example, head and chest) are generally different due to the weight (or resistance) variation in an occupant's body. According to an embodiment, an airbag device includes different energy absorption areas that correspond to a different part of an occupant. For example, for the embodiment shown in Figure 1, the separated portion is expected to absorb the energy from the occupant's head and the left and right portions are expected to absorb the energy from the occupant's chest region.

According to an embodiment, as shown in Figures 4 through 6, the airbag 30 has an upper half of a connected portion and the lower half with a separated portion. The separated portion 34 produces a higher level of energy absorption and can protect an occupant's head coming into contact with an airbag 30 during a collision. In this embodiment, the occupant can be in an out-of-position location or the occupant's head is close to the airbag module at the time the airbag deploys, for example, a small child or a short adult occupant.

According to the example, as shown in Figures 7 through 9, the airbag 40 has left 42 and right 46 portions. The airbag 40 is separated between the left 42 and right 46 portions in both the upper and lower half of the airbag 40. The separated portion 44 produces a higher level of energy absorption to protect an occupant's head. The separated portion 44 also contacts the upper body of an occupant, generally the occupant's shoulder, in order to reduce an occupant's forward movement during a collision.

The separated portion 24, 34, 44 between the left 22, 32, 42 and right 26, 36, 46 portions can be created by stitching a seam along the airbag 20, 30, 40 prior to folding and placing it within the airbag module. The separated portion 24, 34, 44 can be created by tethers within the airbag 20, 30, 40 causing a separation 24, 34, 44 between the portions 22, 26, 32, 36, 42, 46.

The separated regions 24, 34, 44 of the airbag 20, 30, 40, allow an occupant to safely contact the surface of the airbag 20, 30, 40 when close to the airbag 20, 30, 40 and/or when the occupant has a high kinetic energy. The airbag 20, 30, 40 with the separated portion 24, 34, 44 and the higher levels of energy absorption areas allows the occupant to be further protected by this airbag 20, 30, 40.

According to the above examples, the separated regions 24, 34, 44 of the airbag 20, 30, 40 provide for an increased energy absorption capability for the airbag. When the vehicle occupant contacts the separated region of the airbag first, the vehicle occupant may travel a further distance forward than the occupant would otherwise travel when an airbag without a separation region is utilized. As a result, the kinetic energy of the occupant is higher and the resulting energy absorbed by the airbag is correspondingly increased when the occupant contacts the separated region of the airbag.

It is noted that the areas and regions shown in the Figures should be considered only as general representations of the areas and regions, not exact locations.

## Claims

1. An airbag device comprising:
an airbag (20) including a first region (25) and a second region (21);
wherein the first region (25) is configured to absorb more energy from an occupant than the second region (21), **characterized in that**
the airbag (20) includes a left portion (22) and a right portion (26), the left portion (22) being separated from the right portion (26) only in an upper half of the left and right portions (22, 26),
wherein the separated upper half of the left and right portion (22, 26) forms the first region (25) and the lower half of the left and right portion (22, 26) forms the second region (26).

2. The airbag device according to claim 1, wherein the airbag (20) is configured to absorb the energy of a 95^{th} percentile male at a first area (27) in the upper half of the left and right portion (22, 26).

3. The airbag device according to claims 1 or 2, wherein the airbag (20) is configured to absorb the energy of a 50^{th} percentile male at a second area (28) in the upper half of the left and right portion (22, 26).

4. The airbag device according to any one of the preceding claims, wherein the airbag (20) is configured to absorb the energy of a 5^{th} percentile female at a third area (29) in the upper half of the left and right portion (22, 26).

5. An airbag device comprising:
an airbag (30) including a first region (35) and a second region (31);
wherein the first region (35) is configured to absorb more energy from an occupant than the second region (31), **characterized in that**
the airbag (30) includes a left portion (32) and a right portion (36), the left portion being separated from the right portion only in a lower half of the left and right portions (32, 36),
wherein the separated lower half of the left and right portion (32, 36) forms the first region (35) and upper half of the left and right portion (32, 36) forms the second region (36).

6. The airbag device according to claim 5, wherein the airbag (30) is configured to protect an occupant when the occupant is in an out of position location in a collision.

7. An occupant protection device comprising:
an airbag device having an airbag (20; 30);
an electronic control unit (70) configured to transmit a signal to inflate the airbag (20; 30);
wherein the electronic control unit (70) receives input from a seat weight sensor (62) for weighing a seat for a vehicle including the weight of a passenger on the seat and a pre-crash sensor (72); and
wherein the airbag device is configured according to any one of claims 1-6.

## Patentansprüche

1. Airbagvorrichtung umfassend:
einen Airbag (20), welcher einen ersten Bereich (25) und einen zweiten Bereich (21) aufweist;
wobei der erste Bereich (25) derart ausgestaltet ist, dass er mehr Energie von einem Insassen als der zweite Bereich (21) absorbiert,
**dadurch gekennzeichnet,**
**dass** der Airbag (20) einen linken Abschnitt (22) und einen rechten Abschnitt (26) aufweist, wobei der linke Abschnitt (22) von dem rechten Abschnitt (26) nur in einer oberen Hälfte des linken und des rechten Abschnitts (22, 26) getrennt ist,
wobei die aufgetrennte obere Hälfte des linken und des rechten Abschnitts (22, 26) den ersten Bereich (25) ausbildet und die untere Hälfte des linken und des rechten Abschnitts (22, 26) den zweiten Bereich (26) ausbildet.

2. Airbagvorrichtung nach Anspruch 1, wobei der Airbag (20) derart ausgestaltet ist, dass er die Energie eines 95. Perzentils von Männern bei einem ersten Bereich (27) in der oberen Hälfte des linken und des rechten Abschnitts (22, 26) absorbiert.

3. Airbagvorrichtung nach Anspruch 1 oder 2, wobei der Airbag (20) derart ausgestaltet ist, dass er die Energie eines 50. Perzentils von Männern bei einem zweiten Bereich (28) in der oberen Hälfte des linken und des rechten Abschnitts (22, 26) absorbiert.

4. Airbagvorrichtung nach einem der vorhergehenden Ansprüche, wobei der Airbag (20) derart ausgestaltet ist, dass er die Energie eines 5. Perzentils von Frauen bei einem dritten Bereich (29) in der oberen Hälfte des linken und des rechten Abschnitts (22, 26) absorbiert.

5. Airbagvorrichtung umfassend:
einen Airbag (30), welcher einen ersten Bereich (35) und einen zweiten Bereich (31) aufweist;
wobei der erste Bereich (35) derart ausgestaltet ist, dass er mehr Energie von einem Insassen als der zweite Bereich (31) absorbiert,
**dadurch gekennzeichnet,**
**dass** der Airbag (30) einen linken Abschnitt (32) und einen rechten Abschnitt (36) aufweist, wobei der linke Abschnitt von dem rechten Abschnitt nur in einer unteren Hälfte des linken und des rechten Abschnitts (32, 36) getrennt ist,
wobei die aufgetrennte untere Hälfte des linken und des rechten Abschnitts (32, 36) den ersten Bereich (35) ausbildet und eine obere Hälfte des linken und des rechten Abschnitts (32, 36) den zweiten Bereich (36) ausbildet.

6. Airbagvorrichtung nach Anspruch 5, wobei der Airbag (30) derart ausgestaltet ist, dass er einen Insassen schützt, wenn sich der Insasse bei einer Kollision in einer Fehlstellung befindet.

7. Insassenschutzvorrichtung umfassend:
eine Airbagvorrichtung mit einem Airbag (20; 30);
eine elektronische Steuereinheit (70), welche derart ausgestaltet ist, dass sie ein Signal überträgt, um den Airbag (20; 30) aufzublasen;
wobei die elektronische Steuereinheit (70) eine Eingabe von einem Sitzgewichtssensor (62), um einen Sitz für ein Fahrzeug einschließlich des Gewichtes eines Insassen auf dem Sitz zu wiegen, und von einem Pre-Crash-Sensor (72) empfängt; und
wobei die Airbagvorrichtung nach einem der Ansprüche 1-6 ausgestaltet ist.

## Revendications

1. Dispositif de coussin gonflable comprenant :
- un coussin gonflable (20) comprenant une première région (25) et une seconde région (21) ;
dans lequel la première région (25) est configurée de manière à absorber plus d'énergie de la part d'un occupant que la seconde région (21),
**caractérisé en ce que**
- le coussin gonflable (20) inclut une partie gauche (22) et une partie droite (26), la partie gauche (22) n'étant séparée de la partie droite (26) que dans une moitié supérieure de la partie gauche et de la partie droite (22, 26),
la moitié supérieure séparée de la partie gauche et de la partie droite (22, 26) formant la première région (25), et la moitié inférieure de la partie gauche et de la partie droite (22, 26) formant la seconde région (26).

2. Dispositif de coussin gonflable selon la revendication 1, dans lequel le coussin gonflable (20) est configuré de manière à absorber l'énergie de 95 % pour cent des hommes au niveau d'une première zone (27) dans la moitié supérieure de la partie gauche et de la partie droite (22, 26).

3. Dispositif de coussin gonflable selon l'une quelconque des revendications 1 ou 2, dans lequel le coussin gonflable (20) est configuré de manière à absorber l'énergie de 50 % pour cent des hommes au niveau d'une deuxième zone (28) dans la moitié supérieure de la partie gauche et de la partie droite (22, 26).

4. Dispositif de coussin gonflable selon l'une quelconque des revendications précédentes, dans lequel le coussin gonflable (20) est configuré de manière à absorber l'énergie de 5 % pour cent des femmes (parmi les plus légères) au niveau d'une troisième zone (29) dans la moitié supérieure de la partie gauche et de la partie droite (22, 26).

5. Dispositif de coussin gonflable comprenant :
- un coussin gonflable (30) comprenant une première région (35) et une seconde région (31) ;
dans lequel la première région (35) est configurée de manière à absorber plus d'énergie de la part d'un occupant que la seconde région (31),
**caractérisé en ce que**
- le coussin gonflable (30) inclut une partie gauche (32) et une partie droite (36), la partie gauche (32) n'étant séparée de la partie droite que dans une moitié inférieure des parties gauche et droite (32, 36),
la moitié inférieure séparée de la partie gauche et de la partie droite (32, 36) formant la première région (35), et la moitié supérieure de la partie gauche et de la partie droite (32, 36) formant la seconde région (36).

6. Dispositif de coussin gonflable selon la revendication 5, dans lequel le coussin gonflable (30) est configuré de manière à protéger un occupant lors d'une collision lorsque l'occupant se trouve dans un emplacement qui n'est pas celui de sa position normale.

7. Dispositif de protection d'un occupant comprenant:
- un dispositif de coussin gonflable présentant un coussin gonflable (20 ; 30) ;
- une unité de commande électronique (70) configurée pour transmettre un signal pour gonfler le coussin gonflable (20 ; 30) ;
dans lequel l'unité de commande électronique (70) reçoit un signal d'entrée en provenance d'un capteur de poids (62) pour siège pour peser un siège d'un véhicule y compris le poids d'un passager assis sur le siège, et d'un capteur (72) avant écrasement ; et,
dans lequel le dispositif de coussin gonflable est configuré selon l'une quelconque des revendications 1 à 6.
